# FASCICULE DE BREVET EUROPEEN

(11) **EP 2 644 246 B1**
(45) Date de publication et mention de la délivrance du brevet: **17.01.2018**
(21) Numéro de dépôt: 13161247.5
(22) Date de dépôt: 27.03.2013
(51) Int. Cl.: B01D 46/24, B01D 46/00

(54) **Filtre à air muni de moyens d'assemblage de ses élements filtrants**
Luftfilter, der mit Mitteln zum Zusammenbau seiner Filterelemente ausgestattet ist
Air filter with a means for assembling the filter elements thereof

(30) Priorité: 28.03.2012 FR 1252794
(43) Date de publication de la demande: 02.10.2013
(73) Titulaire: Safran Filtration Systems, 87800 Nexon (FR)
(72) Inventeur: BERNARD, Bruno, 87800 NEXON (FR); LAGORCE, Edmond, 87800 NEXON (FR); PLANCKEEL, Cédric, 87800 NEXON (FR); ARNAUD, Marlène, 87800 NEXON (FR)
(74) Mandataire: Regimbeau

(56) Documents cités:
- EP-A1- 1 199 093
- DE-A1- 19 826 032
- DE-A1-102004 033 822
- DE-A1-102010 027 150
- GB-A- 2 265 842

## Description

### DOMAINE TECHNIQUE GENERAL

La présente invention concerne le domaine des filtres à air dans le domaine de l'aviation, et plus précisément les moyens d'assemblage de filtres à air en plusieurs parties.

### ETAT DE L'ART

Les filtres à air dans le domaine de l'aviation doivent répondre à des contraintes d'encombrement précises, ce qui rend délicate la manipulation et la mise en place des différents composants.

Plus précisément, dans le cas d'un logement ayant une forme allongée et adaptée pour recevoir plusieurs éléments filtrants qui y sont insérés successivement, la manipulation de ces éléments et en particulier leur retrait s'avère problématique, notamment pour les éléments qui sont disposés au fond du logement.

On utilise en effet plusieurs éléments filtrants qui sont disposés dans un logement en raison de contraintes de recul nécessaire à leur manipulation ; un élément unique ne pourrait pas être manipulé aisément. En outre, il est plus aisé industriellement de réaliser une pluralité d'éléments filtrants de dimensions moindres qu'un élément filtrant unique ayant des dimensions importantes.

L'opérateur doit en effet accéder à des éléments filtrants qui demeurent dans le fond du logement pour des opérations de maintenance ou de remplacement qui nécessitent leur extraction du logement, ce qui n'est pas aisé dans le cas d'un logement allongé ou en l'absence d'outils spécifiques adaptés.

Dans l'art antérieur, on connaît du document GB 2265842 des éléments filtrants 10 reliés entre eux par des moyens d'assemblage de type mâle-femelle. Le document DE19826032 décrit quant à lui un système d'assemblage modulaire pour des éléments filtrant au moyen de doigts adaptés pour coopérer avec des encoches. Enfin, le document EP 1199093 décrit des moyens d'engagement d'un élément filtrant dans un logement.

### PRESENTATION DE L'INVENTION

La présente invention vise à proposer un système ne présentant pas de tels inconvénients, et propose ainsi un filtre à air tel que défini dans la revendication 1. En variante, lesdits moyens d'assemblage comprennent deux moyens disposés en vis-à-vis sur lesdits deux éléments filtrants disposés dans le logement, lesdits moyens comprenant chacun une extrémité fixée à un élément filtrant, et une extrémité libre présentant une portion de tête comprenant une surface d'engagement, de sorte que lesdits moyens se déforment élastiquement lors du rapprochement desdits éléments filtrants pour que les têtes desdits moyens d'assemblage passent au-delà l'une de l'autre, le retour élastique desdits moyens engageant leurs surfaces d'engagement de manière à ce qu'elles coopèrent et assurent la liaison des éléments filtrants en translation selon ladite direction longitudinale.

Chacune desdites portions de tête comprend alors une surface de positionnement adaptée pour coopérer afin de guider le déplacement et la déformation élastique des profilés.

Lesdits profilés comprennent alors typiquement un corps reliant l'extrémité fixée à l'élément filtrant à la portion de tête, ledit corps comprenant des portions adaptées pour se déformer élastiquement Selon une autre variante, lesdits moyens d'assemblage comprennent
- un rebord disposé sur l'un desdits éléments filtrants, et
- un moyen comprenant une extrémité fixée à l'autre élément filtrant, et une extrémité libre présentant une portion de tête comprenant une surface d'engagement, de sorte que ledit moyen se déforme élastiquement lors du rapprochement desdits éléments filtrants pour que la tête dudit moyen passe au-delà dudit rebord, le retour élastique dudit moyen profilé engageant sa surface d'engagement avec le rebord de manière à ce qu'ils coopèrent et assurent l'association des éléments filtrants en translation selon ladite direction longitudinale.

Les moyens d'assemblage sont par exemple des profilés métalliques, ou réalisés par injection plastique.

En variante, chacun des éléments filtrants comprend au moins un moyen d'assemblage à chacune de ses extrémités.
Chacun des éléments filtrants comprend alors typiquement deux moyens d'assemblage à chacune de ses extrémités et disposés de manière symétrique.
Les moyens d'assemblage sont alors typiquement identiques.

En variante, lesdits éléments filtrants présentent une cavité interne s'étendant sur toute la longueur desdits éléments filtrants, les moyens d'assemblage de chacun des éléments filtrants étant disposés dans la cavité interne de chacun des éléments filtrants.

En variante, chacun desdits moyens d'assemblage comprend :
- une section d'ancrage à un élément filtrant, adaptée pour être fixée sur une surface d'un élément filtrant,
- un support s'étendant sensiblement perpendiculaire à ladite surface de l'élément filtrant à laquelle la section d'ancrage est fixée,
- une lamelle, s'étendant dans la direction longitudinale de l'élément filtrant à partir dudit support,
- une tête s'étendant à une extrémité libre de ladite lamelle, ladite tête comprenant une surface d'engagement s'étendant à partir de ladite extrémité libre de la lamelle de manière à former un angle aigu par rapport à ladite lamelle, et une surface de positionnement comprenant un premier segment s'étendant à partir de la surface d'engagement en direction du plan défini par ladite lamelle et dans le prolongement de ladite lamelle, et un second segment s'étendant dans le prolongement dudit premier segment, parallèlement au dit premier segment par rapport à un plan parallèle au plan défini par ladite lamelle, de sorte que lesdits premier et second segments soient de part et d'autre du plan défini par ladite lamelle.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1 et 2 présentent un filtre à air selon un aspect de l'invention,
- la figure 3 présente une structure de moyens d'assemblage selon un aspect de l'invention,
- les figures 4 à 10 présentent un exemple de fonctionnement de tels moyens d'assemblage,
- la figure 11 présente un exemple de positionnement de ces moyens d'assemblage,
- la figure 12 présente un autre exemple de filtre à air selon un aspect de l'invention,
- la figure 13 illustre un autre mode de réalisation de l'exemple présenté sur la figure 12, et
- la figure 14 présente un exemple de positionnement d'un tel mode de réalisation.

Sur l'ensemble des figures, les éléments identiques ou similaires sont repérés par des références numériques communes.

### DESCRIPTION DETAILLEE

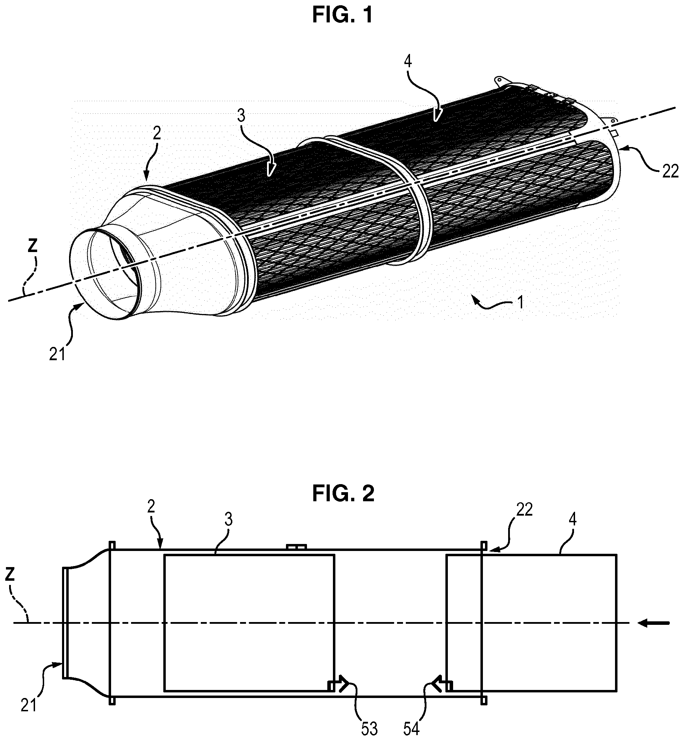

La figure 1 présente une vue d'un filtre à air 1 comprenant un logement 2 dans lequel sont logés deux éléments filtrants 3 et 4.
Le logement 2 présente une forme allongée selon une direction longitudinale repérée sur la figure 1 par un axe longitudinal Z.

Dans la présente description, on désigne par « direction longitudinale » la direction longitudinale du logement, selon laquelle les éléments filtrants peuvent coulisser dans ledit logement.
Ainsi, on se réfère également à la direction longitudinale des éléments filtrants, correspondant à cette même direction dans laquelle ils peuvent coulisser lorsqu'ils sont disposés dans le logement.

On définit une extrémité proximale 21 du logement 2, qui est adaptée pour être reliée à des conduits d'un système de filtration, et une extrémité distale 22 pouvant être ouverte afin d'extraire les éléments filtrants 3 et 4 se trouvant dans le logement 2, cette extrémité distale 22 pouvant être obturée, par exemple au moyen d'un couvercle. Un tel couvercle ferme avantageusement le volume interne de l'élément filtrant 4 adjacent à l'extrémité distale 22 de manière étanche.

La figure 2 présente schématiquement la disposition des éléments filtrants 3 et 4 dans le logement 2.
Sur cette figure, on représente le premier élément filtrant 3 qui a été inséré dans le logement 2 via son extrémité distale 22 et poussé en direction de l'extrémité proximale 21, et le second élément filtrant 4 qui est inséré dans le logement 2 via son extrémité distale 22, la flèche sur la figure représentant le déplacement de ce second élément filtrant 4. Lorsqu'un utilisateur insère le second élément filtrant 4 dans le logement 2, il le déplace selon la direction longitudinale du logement 2 vers son extrémité proximale 21, ce qui va également pousser le premier élément filtrant 3 qui avait été inséré précédemment dans le logement 2 vers cette extrémité proximale 21, jusqu'à venir en butée. L'extrémité distale 22 du logement 2 est ensuite typiquement obturée avec un couvercle (non représenté) comme mentionné précédemment.

Pour retirer les éléments filtrants, l'utilisateur ouvre l'extrémité distale 22 du logement 2, puis extrait le second élément filtrant 4, et ensuite le premier élément filtrant 3.
En l'absence de moyens adaptés, on comprend bien que le retrait du premier élément filtrant 3 est délicat, dans la mesure où il est disposé au fond du logement 2, éloigné de l'extrémité distale 22 ouverte. Sa préhension et sa manipulation sont donc délicates voire impossible en l'absence de moyens adaptés. Dans certains modèles de filtre à air, la distance entre l'extrémité distale 22 du logement 2 et l'élément filtrant 3 disposé au fond du logement 2 peut être supérieure à la longueur d'un bras d'un utilisateur, rendant ainsi sa préhension très complexe sans outils.

Le filtre à air tel que présenté comprend ainsi des moyens d'assemblage 5 disposés sur les éléments filtrants 3 et 4. On repère par les références 53 et 54 les moyens d'assemblage disposés respectivement sur le premier élément filtrant 3 et le second élément filtrant 4.
Les moyens d'assemblage 5 sont adaptés pour s'engager lorsque les deux éléments filtrants 3 et 4 qui en sont munis sont disposés dans le logement 2, pour permettre d'extraire le premier élément filtrant 3 avec le second élément filtrant 4, tout en pouvant être désengagés aisément par un utilisateur.

Plus précisément, les moyens d'assemblage dans le filtre à air tel que représenté sont adaptés pour :
- s'engager lors de l'aboutement des éléments filtrants 3 et 4 par translation desdits éléments filtrants 3 et 4 dans le logement 2 selon sa direction longitudinale Z,
- associer les éléments filtrants 3 et 4 en translation selon ladite direction longitudinale Z,
- se désengager lors d'un déplacement relatif desdits éléments filtrants 3 et 4 selon une direction sensiblement perpendiculaire à ladite direction longitudinale Z ou une rotation de l'un desdits éléments filtrants 3 ou 4 par rapport à l'autre 4 ou 3.
Par « association » des éléments filtrants 3 et 4 en translation selon la direction longitudinale Z du logement 2, on entend que le déplacement de l'un des éléments filtrants 3 ou 4 entraine également un déplacement de l'autre des éléments filtrants 3 ou 4, étant bien entendu qu'un débattement est possible, résultant par exemple d'un jeu fonctionnel entre les moyens d'assemblage.

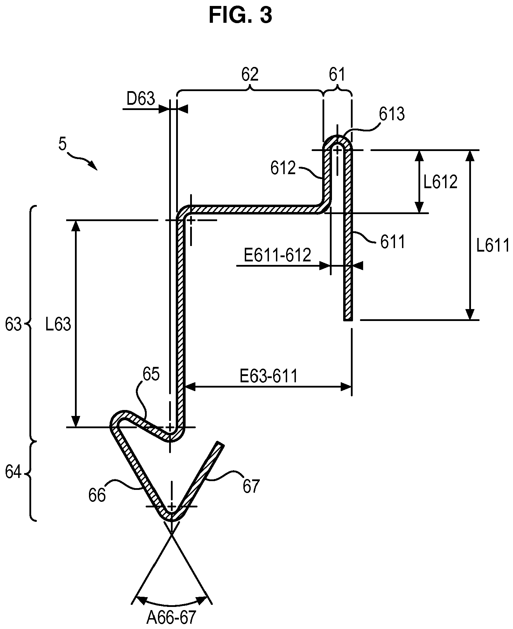

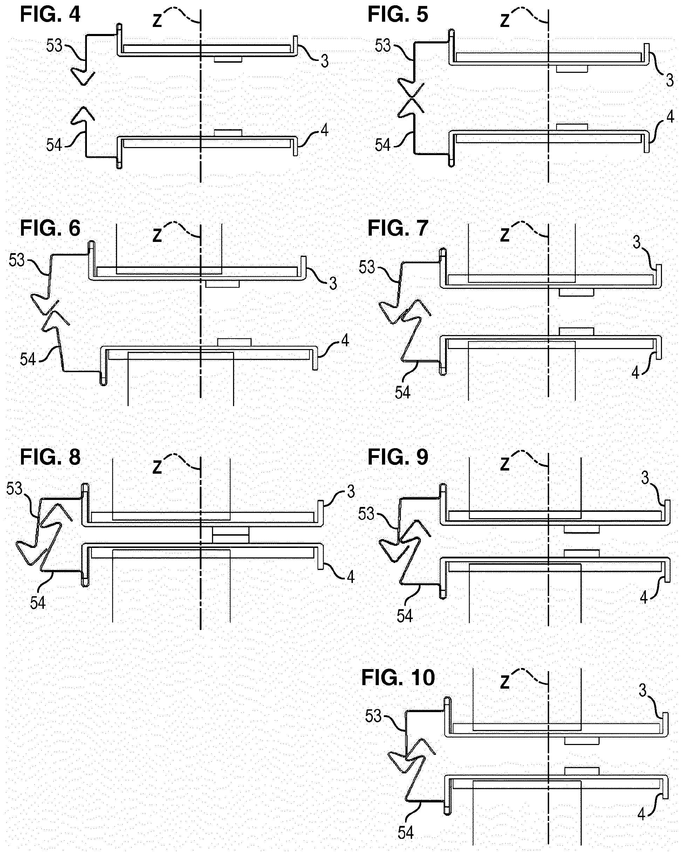

La figure 3 détaille la structure d'un mode de réalisation de moyens d'assemblage 5.
Les moyens d'assemblage 5 tels que présentés comprennent :
- une section d'ancrage 61 à un élément filtrant 3 ou 4, adaptée pour être fixée sur une surface d'un élément filtrant 3 ou 4,
- un support 62 sensiblement perpendiculaire à ladite surface de l'élément filtrant 3 ou 4 à laquelle la section d'ancrage 61 est fixée, ledit support 62 étant adaptée à se déformer élastiquement ;
- une lamelle 63, s'étendant dans la direction longitudinale Z de l'élément filtrant 3 ou 4 à partir dudit support 62, le support 62 permettant d'écarter la lamelle 63 de la surface de l'élément filtrant 3 ou 4 sur lequel ledit moyen d'assemblage 5 est fixé, ladite lamelle 63 étant adaptée pour se déformer élastiquement, par exemple une lamelle ressort ;
- une tête 64 s'étendant à une extrémité libre de ladite lamelle 63, ladite tête 64 comprenant une portion d'engagement 65 s'étendant à partir de ladite extrémité libre de la lamelle 63 de manière à former un angle aigu par rapport à ladite lamelle 63, et une portion de positionnement comprenant un premier segment 66 s'étendant à partir de la portion d'engagement 65 vers le plan défini par ladite lamelle 63 et dans le prolongement de ladite lamelle 63, et un second segment 67 s'étendant dans le prolongement dudit premier segment 66, symétriquement au dit premier segment 66 par rapport au plan défini par ladite lamelle 63, de sorte que lesdits premier et second segments 66 et 67 soient de part et d'autre du plan défini par ladite lamelle 63.
On décrit ici un exemple précis de dimensionnement du moyen d'assemblage 5 présenté sur la figure 10. Les dimensions décrites ci-après sont entendues au tolérancement près, pour un moyen d'assemblage 5 qui n'est pas soumis à un effort entrainant une déformation élastique. Le moyen d'assemblage 5 est par exemple formé d'une plaque métallique ayant une largeur égale à 24mm, une épaisseur égale à 0,3 mm et pliée comme décrit ci-après.
La section d'ancrage 61 comprend
- un premier segment 611 ayant une longueur L611 typiquement égale à 10,5mm ;
- un second segment 612 ayant une longueur L612 typiquement égale à 3,8mm,
- lesdits segments 611 et 612 étant reliés par un coude 613 dimensionné de sorte que l'écart E611-612 entre lesdits segments 611 et 612 est typiquement égal à 1mm.
Le support 62 est ici formée d'un unique segment rectiligne, dimensionné de manière à définit un espacement E63-611 égal à 10mm entre le premier segment 611 de la section d'ancrage 61 et la lamelle 63. Ce segment rectiligne est relié au second segment 612 de la section d'ancrage 61 par un coude formant un angle de 90°.
La lame ressort 63 est formée d'un unique segment rectiligne, ayant une longueur L63 égale à 13,2mm, relié au support 62 par un coude formant un angle de 90°.
La portion d'engagement 65 de la tête 64 est formée d'un segment rectiligne, relié à la lame ressort 63 par un coude de manière à former un angle aigu avec ladite lame ressort 63, c'est-à-dire de manière à ce que l'angle formé par ladite portion d'engagement 65 et ladite lame ressort 63 soit strictement inférieur à 90°.

Cette portion d'engagement 65 est ensuite reliée par un coude au premier segment de tête 66, qui est ici formé d'un segment rectiligne s'étendant vers le plan défini par ladite lamelle 63, et relié par un coude au second segment de tête 67 par un coude de sorte que ces deux segments de tête 66 et 67 forment un angle A66-67 égal à 60°. L'intersection de ces deux segments de tête 66 et 67 est par exemple dans un plan parallèle au plan défini par la lamelle 63, à une distance D63 de la lamelle 63 égale à 0,5mm.

D'autres modes de réalisation sont bien entendu possibles.
Les moyens d'assemblage 5 tels que présentés peuvent être réalisés au moyen de tôle mise en forme, mais on peut également les réaliser par injection de matière plastique. La géométrie des moyens d'assemblages 5 est alors adaptée, notamment la tête 64 qui est alors typiquement pleine, ainsi que le support 62.

Les figures 4 à 10 présentent un exemple de fonctionnement de tels moyens d'assemblage 5, lors d'un rapprochement puis d'un éloignement de deux éléments filtrants 3 et 4 tels que présentés précédemment selon l'axe longitudinal Z d'un logement 2 dans lequel ils sont disposés.
La figure 4 présente deux éléments filtrants 3 et 4 munis de moyens d'assemblage 53 et 54 respectivement, ces deux éléments filtrants n'étant alors pas en contact.
La figure 5 illustre le rapprochement de ces éléments filtrants 3 et 4, jusqu'au contact entre leurs moyens d'assemblage respectifs 53 et 54.
En poursuivant le rapprochement des éléments filtrants 3 et 4, on observe sur la figure 6 une déformation élastique des deux moyens d'assemblage, notamment de leurs supports 62 et lamelles 63 de manière à ce que le premier segment de tête de l'un vienne au contact du second segment de tête de l'autre, et que ces deux segments glissent l'un sur l'autre lors du rapprochement des éléments filtrants 3 et 4, comme représenté sur la figure 7.

La figure 8 illustre l'aboutement des deux éléments filtrants 3 et 4 ; la tête de l'un des éléments filtrants est passée au-delà de la tête de l'autre élément filtrant. Cette configuration correspond typiquement au mode opérationnel du filtre 1, c'est-à-dire que les deux éléments filtrants 3 et 4 sont disposés dans le logement 2 fermé de manière étanche à son extrémité distale 22 ; les moyens d'assemblage 53 et 54 ne sont alors pas sollicités selon l'axe Z.
Les figures 9 et 10 illustrent ensuite un éloignement progressif des deux éléments filtrants 3 et 4 ; on remarque que les têtes des deux moyens d'assemblage 53 et 54 coopèrent afin de relier les éléments filtrants 3 et 4. Le second segment de tête de l'un des moyens d'assemblage coopère avec la portion d'engagement de l'autre moyen d'assemblage pour empêcher la séparation des éléments filtrants 3 et 4 lors d'un déplacement selon la direction longitudinale Z.

Afin de désolidariser les deux éléments filtrants 3 et 4, un utilisateur peut réaliser plusieurs mouvements, par exemple une translation selon une direction perpendiculaire à la direction longitudinale Z.
Selon certaines variantes, l'utilisateur peut également réaliser une rotation de l'un des éléments filtrants par rapport à la direction longitudinale Z afin de désolidariser les deux éléments filtrants 3 et 4.

En se référant à l'ensemble présenté sur la figure 2, avec des éléments filtrants 3 et 4 munis de tels moyens d'assemblage, l'utilisateur insère le premier élément filtrant 3 dans le logement 2, puis le second élément filtrant 4 qui va pousser le premier élément filtrant 3 jusqu'au fond du logement 2. Ce second élément filtrant 4 va ainsi venir au contact du premier élément filtrant 3, ce qui provoque l'engagement de leurs moyens d'assemblage 5 comme décrit précédemment.

On remarque que le mode de réalisation présenté sur la figure 3 et son fonctionnement présenté sur les figures 4 à 10 va entrainer un signal sonore distinctif lorsque la tête de l'un des moyens d'assemblage 5 dépasse la tête de l'autre moyen d'assemblage, lorsque la tête de l'un des moyens d'assemblage est ramenée au contact de la lame ressort de l'autre moyen d'assemblage par sa propre lame ressort ; l'utilisateur va alors entendre un son métallique si les moyens d'assemblage sont formés d'une plaque métallique mise en forme, ou plus généralement un bruit de choc entre les deux moyens d'assemblage 5, indiquant que leur engagement a bien eu lieu.

Lorsque l'utilisateur souhaite ensuite retirer les éléments filtrants 3 et 4 du logement 2, il tire le second élément filtrant 4 dans la direction longitudinale, de manière à le faire sortir par l'extrémité distale 22 ouverte du logement 2, et entraine ainsi avec lui le premier élément filtrant 3 du fait de l'engagement préalable de leurs moyens d'assemblage et donc de l'association des éléments filtrants 3 et 4 en translation selon l'axe longitudinal Z.
L'utilisateur peut ainsi sortir entièrement le second élément filtrant 4 du logement 2, le désengager du premier élément filtrant 3 par exemple par une translation adaptée selon une direction perpendiculaire à la direction longitudinale Z du logement 2, puis sortir le premier élément filtrant 3 du logement 2, ce premier élément filtrant étant alors facilement accessible puisqu'à proximité de l'extrémité distale 22 du logement 2.

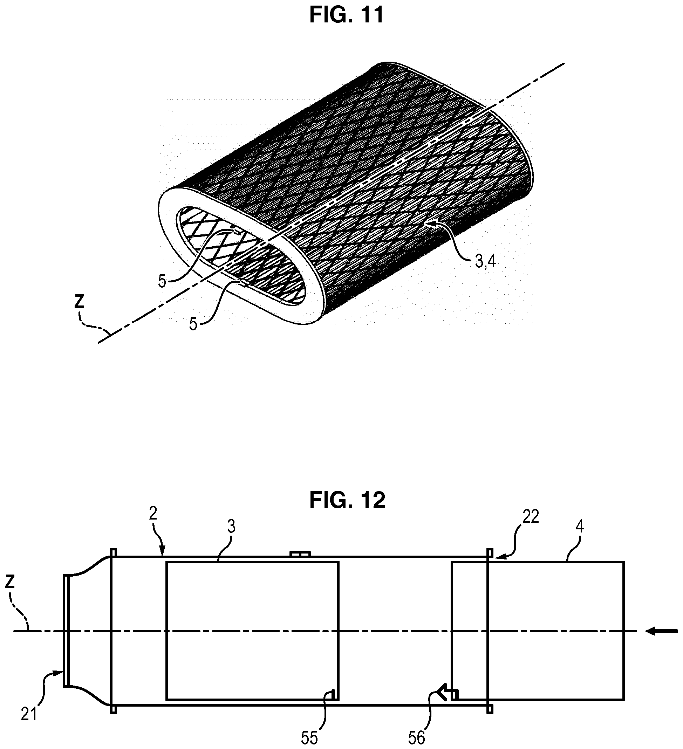

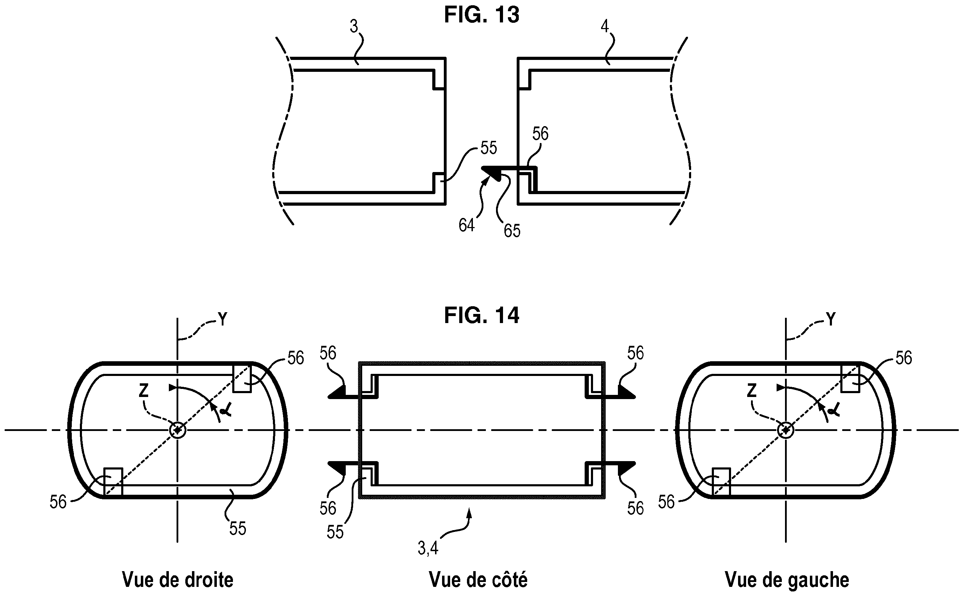

La figure 11 illustre un exemple de positionnement de moyens d'assemblage 5 dans un élément filtrant.
L'élément filtrant tel que présenté a une forme de cylindre creux selon un axe longitudinal Z, son contour externe étant délimité par un flasque. Les moyens d'assemblages 5 sont ici disposés de manière à faire saillie par une des extrémités longitudinales de l'élément filtrant, à l'intérieur de l'élément filtrant.
On remarque ici que l'élément filtrant comprend deux moyens d'assemblage 5 disposés de manière symétrique, de manière à ce qu'en associant deux éléments filtrants identiques, l'engagement ait lieu sans nécessiter une vérification de l'orientation de l'élément filtrant autour de son axe Z, c'est-à-dire que l'utilisateur n'a pas à vérifier le « dessus » ou le « dessous » de l'élément filtrant.
Par disposition symétrique, on entend toute configuration de deux moyens d'assemblage 5 localisés symétriquement par rapport à l'axe central de l'élément filtrant, en l'occurrence l'axe longitudinal Z.
Cette disposition symétrique est réalisée de sorte que les moyens d'assemblage complémentaires des deux éléments filtrants 3 et 4 soient disposés en regard, qu'il s'agisse de moyens d'assemblages 5 identiques comme présenté sur les figures précédentes, ou de moyens d'assemblages comprenant deux éléments distincts comme on le présente sur les figures 12 et 13.
Dans l'exemple illustré sur la figure 12, on remarque que les moyens d'assemblage 5 sont alignés verticalement, symétriquement par rapport à l'axe de l'élément filtrant, permettant ainsi de s'assurer qu'en mettant bout à bout deux éléments filtrants identiques leurs moyens d'assemblage 5 seront en vis-à-vis afin de coopérer. On peut alors également les aligner selon un plan horizontal, symétriquement par rapport à l'axe de l'élément filtrant ; plus généralement, les moyens d'assemblage 5 sont typiquement alignés symétriquement par rapport à l'un des plans principaux de l'élément filtrant dans lequel ils sont disposés.
A l'inverse, dans le cas de modes de réalisation où les moyens d'assemblage sont distincts et tels que deux éléments identiques ne coopèrent pas afin d'assurer l'association des éléments filtrants, par exemple dans le cas de clips coopérant avec un rebord comme on le détaillera en référence aux figures 12 et 13 ci-après, on disposera avantageusement les moyens d'assemblage afin de s'assurer que deux moyens d'assemblage identiques ne puissent pas être en vis-à-vis. A titre d'exemple, on peut alors disposer deux clips à chacune des extrémités des éléments filtrants, symétriquement par rapport à l'axe central de l'élément filtrant, et décalés angulairement par rapport au plan horizontal et au plan vertical.

On peut également disposer des moyens d'assemblage 5 à chacune des extrémités de chacun des éléments filtrants, de manière à ne pas nécessiter une vérification du sens d'introduction de ces éléments filtrants dans le logement.

D'autres variantes peuvent également être envisagées, notamment des variantes dans lesquelles les moyens d'assemblages 5 ne sont pas identiques sur les deux éléments filtrants 3 et 4.
La figure 12 illustre un exemple d'autre mode de réalisation des moyens d'assemblage 5.
Dans ce mode de réalisation, les moyens d'assemblage 5 comprennent un premier moyen d'assemblage 55 formé d'un rebord sur le flasque formant la structure de l'élément filtrant 3, ou plus généralement un élément en relief en saillie par rapport à la surface interne de l'élément filtrant 3, et un second moyen d'assemblage 56 par exemple similaire aux moyens d'assemblages présentés précédemment en référence aux figures 2 à 11, ce second moyen d'assemblage 56 pouvant être réalisé par exemple par injection plastique ou au moyen d'une tôle métallique. Le rebord peut quant à lui être aménagé spécifiquement ou intégré à la géométrie de l'élément filtrant, par exemple être formé par la bordure interne du flasque formant la structure de l'élément filtrant.

Ainsi, lorsque l'utilisateur insère le second élément filtrant 4 à la suite du premier élément filtrant 3 dans le logement 2, le second moyen d'assemblage 56 engage le premier moyen d'assemblage 55 de manière à ce que les deux éléments filtrants 3 et 4 soient associés dans leur déplacement selon la direction longitudinale Z, et plus précisément que le retrait de l'élément filtrant 4 du logement 2 entraine également le retrait de l'élément filtrant 3.
En considérant un second moyen d'assemblage 56 similaire à celui présenté sur la figure 3, l'engagement des moyens d'assemblage 55 et 56 s'effectue via la tête 64 du moyen d'assemblage 56 qui passe au-delà du rebord formant le moyen d'assemblage 55, la coopération entre le rebord et la tête réalisant ainsi l'association des deux éléments filtrants 3 et 4. Le rebord a alors avantageusement une hauteur adaptée pour que son extrémité soit sensiblement inférieure au sommet de la tête 64 du second moyen d'assemblage 56, de manière à ce qu'il coopère avec le second segment 67 de la tête 64 comme décrit précédemment afin que la tête 64 passe au-delà du rebord.
Pour retirer les éléments filtrants 3 et 4, une fois l'élément filtrant 4 sorti du logement 2, l'utilisateur le déplace selon une direction sensiblement perpendiculaire à l'axe longitudinal Z de sorte que les deux moyens d'assemblage 55 et 56 se désengagent, typiquement que la tête 64 du second moyen d'assemblage 56 repasse au-dessus du rebord formant le premier moyen d'assemblage 55. L'utilisateur peut alors retirer l'élément filtrant 4 et l'élément filtrant 3 individuellement.
On comprend bien que la disposition des deux moyens d'assemblage 5 sur les éléments filtrants 3 et 4 peut être inversée.

La figure 13 présente une autre variante de moyens d'assemblage 5 selon le mode de réalisation illustré sur la figure 12.
Les deux éléments filtrants 3 et 4 présentent ici un flasque comprenant un rebord s'étendant sur tout le contour de la périphérie interne de chacune de leurs extrémités, formant ainsi le premier moyen d'assemblage 55.
L'un des éléments filtrants comprend un moyen d'assemblage 56 complémentaire ; typiquement un clip ou crochet présentant une tête 64 en saillie et adaptée pour passer au-delà du rebord 55 et ainsi d'engager les deux éléments filtrants 3 et 4.
Dans le mode de réalisation représenté, le moyen d'assemblage 56 a une tête pleine de section triangulaire, présentant ainsi une face formant une surface d'engagement 65 avec le rebord 55.

La figure 14 illustre un exemple de disposition de tels moyens d'assemblage 5 sur un élément filtrant.

On représente sur cette figure 14 une vue de côté (au centre), une vue de gauche et une vue de droite d'un élément filtrant, la direction verticale par Y et la direction horizontale par X par rapport à l'axe central Z de l'élément filtrant.
L'élément filtrant comprend ici deux moyens d'assemblage 56 de type clip ou crochet à chacune de ses extrémités, symétriquement par rapport à l'axe central Z de l'élément filtrant, et décalés d'un angle α par rapport à la direction verticale Y, cet angle α étant par exemple compris entre 10 et 45°.

Le dispositif tel que décrit permet ainsi une manipulation simplifiée d'éléments filtrantss d'un filtre à air disposés dans un logement allongé, sans nécessiter des modifications coûteuses des composants du filtre à air.

## Revendications

1. Filtre à air (1) comprenant :
- un logement (2) longitudinal, présentant une ouverture (22) à une de ses extrémités ;
- deux éléments filtrants (3, 4), mis bout à bout par insertion successive dans ledit logement (2) longitudinal via ladite ouverture (22),
**caractérisé en ce que** chacun desdits éléments filtrants (3, 4) comprend des moyens d'assemblage (5) adaptés pour
- s'engager lors de l'aboutement desdits éléments filtrants (3, 4) par translation desdits éléments filtrants dans ledit logement selon sa direction longitudinale (Z), et ainsi associer lesdits éléments filtrants (3, 4) en translation selon ladite direction longitudinale (Z),
- se désengager lors d'un déplacement relatif desdits éléments filtrants (3, 4) par translation selon une direction sensiblement perpendiculaire à ladite direction longitudinale (Z), ou par rotation de l'un desdits éléments filtrants (3 ou 4) par rapport à l'autre (4 ou 3), lorsque l'un (4) desdits éléments filtrants (3,4) est sorti du logement (2).

2. Filtre à air (1) selon la revendication 1, dans lequel lesdits moyens d'assemblage (5) comprennent deux moyens disposés en vis-à-vis sur lesdits deux éléments filtrants (3, 4) disposés dans le logement (2), lesdits moyens comprenant chacun une extrémité (61) fixée à un élément filtrant, et une extrémité libre présentant une portion de tête (64) comprenant une surface d'engagement (65), de sorte que lesdits moyens d'assemblage (5) se déforment élastiquement lors du rapprochement desdits éléments filtrants (3, 4) pour que les têtes (64) desdits moyens d'assemblage (5) passent au-delà l'une de l'autre, le retour élastique desdits moyens engageant leurs surfaces d'engagement (65) de manière à ce qu'elles coopèrent et assurent l'association des éléments filtrants en translation selon ladite direction longitudinale (Z).

3. Filtre à air (1) selon la revendication 2, dans lequel chacune desdites portions de tête (64) comprend une surface de positionnement (66 et/ou 67) adaptée pour coopérer afin de guider le déplacement et la déformation élastique des moyens.

4. Filtre à air (1) selon l'une des revendications 2 ou 3, dans lequel lesdits moyens comprennent un corps reliant l'extrémité fixée à l'élément filtrant à la portion de tête, ledit corps comprenant des portions adaptées pour se déformer élastiquement (62, 63).

5. Filtre à air (1) selon la revendication 1, dans lequel lesdits moyens d'assemblage (5) comprennent
- un rebord (55) disposé sur l'un desdits éléments filtrants (3), et
- un moyen (56) comprenant une extrémité (61) fixée à l'autre élément filtrant (4), et une extrémité libre présentant une portion de tête (64) comprenant une surface d'engagement (65), de sorte que ledit moyen se déforme élastiquement lors du rapprochement desdits éléments filtrants (3, 4) pour que la tête (64) dudit moyen (56) passe au-delà dudit rebord (55), le retour élastique dudit moyen engageant sa surface d'engagement (65) avec le rebord (55) de manière à ce qu'ils coopèrent et assurent la liaison des éléments filtrants en translation selon ladite direction longitudinale (Z).

6. Filtre à air (1) selon l'une des revendications 1 à 5, dans lequel lesdits moyens d'assemblage (5) sont des profilés métalliques.

7. Filtre à air (1) selon l'une des revendications 1 à 5, dans lequel lesdits moyens d'assemblage (5) sont réalisés par injection plastique.

8. Filtre à air (1) selon l'une des revendications 1 à 7, dans lequel chacun des éléments filtrants (3, 4) comprend au moins un moyen d'assemblage (5) à chacune de ses extrémités.

9. Filtre à air (1) selon la revendication 8, dans lequel lesdits moyens d'assemblage (5) sont identiques.

10. Filtre à air (1) selon l'une des revendications 1 à 9, dans lequel lesdits éléments filtrants (3, 4) présentent une cavité interne s'étendant sur toute la longueur desdits éléments filtrants (3, 4), les moyens d'assemblage (5) de chacun des éléments filtrants (3, 4) étant disposés dans la cavité interne de chacun des éléments filtrants (3, 4).

## Patentansprüche

1. Luftfilter (1) umfassend:
- eine längliche Aufnahme (2), aufweisend eine Öffnung (22) an einem ihrer Enden,
- zwei Filterelemente (3, 4), die durch sukzessives Einsetzen in die längliche Aufnahme (2) über die Öffnung (22) aneinander anstoßen,
**dadurch gekennzeichnet, dass** jedes der Filterelemente (3, 4) Verbindungsmittel (5) umfasst, die geeignet sind, um
- beim Aneinanderstoßen der Filterelemente (3, 4) durch Verschieben der Filterelemente in der Aufnahme gemäß ihrer Längsrichtung (Z) ineinander einzugreifen und somit die Filterelemente (3, 4) in Verschiebung gemäß der Längsrichtung (Z) zu verbinden,
- sich bei einer relativen Verlagerung der Filterelemente (3, 4) durch Verschieben gemäß einer Richtung, die zu der Längsrichtung (Z) etwa senkrecht ist, oder durch Rotation eines der Filterelemente (3 oder 4) in Bezug zum anderen (4 oder 3) voneinander zu lösen, wenn eines (4) der Filterelemente (3, 4) die Aufnahme (2) verlassen hat.

2. Luftfilter (1) nach Anspruch 1, wobei die Verbindungsmittel (5) zwei Mittel umfassen, die einander zugewandt auf den zwei in der Aufnahme (2) angeordneten Filterelementen (3, 4) angeordnet sind, wobei die Mittel jeweils ein Ende (61) umfassen, das an einem Filterelement befestigt ist, und ein freies Ende, das einen Kopfabschnitt (64) aufweist, umfassend eine Eingriffsfläche (65), so dass sich die Verbindungsmittel (5) bei der Annäherung der Filterelemente (3, 4) elastisch verformen, damit die Köpfe (64) der Verbindungsmittel (5) übereinander gelangen, wobei beim elastischen Rückzug der Mittel deren Eingriffsflächen (65) derart ineinander greifen, dass sie zusammenwirken und die Verbindung der Filterelemente in Verschiebung gemäß der Längsrichtung (Z) sichern.

3. Luftfilter (1) nach Anspruch 2, wobei jeder der Kopfabschnitte (64) eine Positionierungsfläche (66 und/oder 67) umfasst, die ausgebildet sind, um zusammenzuwirken, um die Verlagerung und die elastische Verformung der Mittel zu führen.

4. Luftfilter (1) nach einem der Ansprüche 2 oder 3, wobei die Mittel einen Körper umfassen, der das am Filterelement befestigte Ende mit dem Kopfabschnitt verbindet, wobei der Körper Abschnitte aufweist, die geeignet sind, um sich elastisch zu verformen (62, 63).

5. Luftfilter (1) nach Anspruch 1, wobei die Verbindungsmittel (5) umfassen:
- einen Rand (55), der auf einem der Filterelemente (3) angeordnet ist, und
- ein Mittel (56), umfassend ein am anderen Filterelement (4) befestigtes Ende (61) und ein freies Ende, das einen Kopfabschnitt (64) aufweist, umfassend eine Eingriffsfläche (65), so dass sich das Mittel bei der Annäherung der Filterelemente (3, 4) elastisch verformt, damit der Kopf (64) des Mittels (56) jenseits des Randes (55) gelangt, wobei beim elastischen Rückzug des Mittels dessen Eingriffsfläche (65) derart mit dem Rand (55) eingreift, dass sie zusammenwirken und die Verbindung der Filterelemente in Verschiebung gemäß der Längsrichtung (Z) sichern.

6. Luftfilter (1) nach einem der Ansprüche 1 bis 5, wobei die Verbindungsmittel (5) Metallprofile sind.

7. Luftfilter (1) nach einem der Ansprüche 1 bis 5, wobei die Verbindungsmittel (5) durch plastisches Einspritzen hergestellt sind.

8. Luftfilter (1) nach einem der Ansprüche 1 ä 7, wobei jedes der Filterelemente (3, 4) mindestens ein Verbindungsmittel (5) an jedem seiner Enden umfasst.

9. Luftfilter (1) nach Anspruch 8, wobei die Verbindungsmittel (5) identisch sind.

10. Luftfilter (1) nach einem der Ansprüche 1 bis 9, wobei die Filterelemente (3, 4) einen inneren Hohlraum aufweisen, der sich über die gesamte Länge der Filterelemente (3, 4) erstreckt, wobei die Verbindungsmittel (5) jedes Filterelements (3, 4) in dem inneren Hohlraum jedes Filterelements (3, 4) angeordnet sind.

## Claims

1. Air filter (1) comprising:
- a longitudinal housing (2), having an opening (22) at one of the ends thereof;
- two filter elements (3, 4), placed end to end by successive insertion in said longitudinal housing (2) via said opening (22),
**characterized in that** each of said filter elements (3, 4) comprises assembly means (5) suitable for
- being engaged during the abutment of said filter elements (3, 4) by translation of said filter elements in said housing according to the longitudinal direction (Z) thereof, and thereby joining together said filter elements (3, 4) in translation according to said longitudinal direction (Z),
- being disengaged during a relative displacement of said filter elements (3, 4) by translation according to a substantially perpendicular direction to said longitudinal direction (Z), or by rotation of one of said filter elements (3 or 4) with respect to the other (4 or 3), when one (4) of said filter elements (3, 4) is removed from the housing (2).

2. Air filter (1) according to Claim 1, wherein said assembly means (5) comprise two means arranged opposite each other on said two filter elements (3, 4) arranged in the housing (2), said means each comprising one end (61) attached to a filter element, and a free end having a head portion (64) comprising an engagement surface (65), so that said assembly means (5) elastically deform when said filter elements (3, 4) are brought together so that the heads (64) of said assembly means (5) extend beyond each other, the elastic return of said means engaging their engagement surfaces (65) so that they cooperate and ensure the joining together of the filter elements in translation according to said longitudinal direction (Z).

3. An air filter (1) according to Claim 2, wherein each of said head portions (64) comprises a positioning surface (66 and/or 67) suitable for cooperating in order to guide the displacement and elastic deformation of the means.

4. Air filter (1) according to one of Claims 2 or 3, wherein said means comprise a body connecting the end attached to the filter element to the head portion, said body comprising portions suitable for being elastically deformed (62, 63).

5. Air filter (1) according to Claim 1, wherein said assembly means (5) comprise
- a flange (55) arranged on one of said filter elements (3), and
- a means (56) comprising one end (61) attached to the other filter element (4), and a free end having a head portion (64) comprising an engagement surface (65), so that said means elastically deforms when said filter elements (3, 4) are brought together so that the head (64) of said means (56) extends beyond said flange (55), the elastic return of said means engaging the engagement surface (65) thereof with the flange (55) so that they cooperate and ensure the connection of the filter elements in translation according to said longitudinal direction (Z).

6. Air filter (1) according to one of Claims 1 to 5, wherein said assembly means (5) are metal profiles.

7. Air filter (1) according to one of Claims 1 to 5, wherein said assembly means (5) are produced by plastic injection.

8. Air filter (1) according to one of Claims 1 to 7, wherein each of the filter elements (3, 4) comprises at least one assembly means (5) at each of the ends thereof.

9. Air filter (1) according to Claim 8, wherein said assembly means (5) are identical.

10. Air filter (1) according to one of Claims 1 to 9, wherein said filter elements (3, 4) have an internal cavity extending over the whole length of said filter elements (3, 4), the assembly means (5) of each of the filter elements (3, 4) being arranged in the internal cavity of each of the filter elements (3, 4).
